# EUROPÄISCHE PATENTSCHRIFT

(11) **EP 1 994 395 B1**
(45) Veröffentlichungstag und Bekanntmachung des Hinweises auf die Patenterteilung: **01.07.2009**
(21) Anmeldenummer: 07711715.8
(22) Anmeldetag: 28.02.2007
(51) Int. Cl.: G01N 13/16, G12B 21/08

(54) **VERFAHREN ZUR ERMITTLUNG EINER DOTIERUNGSDICHTE IN EINER HALBLEITERPROBE**
METHOD FOR DETERMINING A DOPANT CONCENTRATION IN A SEMICONDUCTOR SAMPLE
PROCÉDÉ POUR DÉTECTER UNE DENSITÉ DE DOPAGE DANS UN ÉCHANTILLON DE SEMI-CONDUCTEUR

(30) Priorität: 12.03.2006 DE 102006011660
(43) Veröffentlichungstag der Anmeldung: 26.11.2008
(73) Patentinhaber: Fraunhofer-Gesellschaft zur Förderung der angewandten Forschung e.V., 80686 München (DE)
(72) Erfinder: ARNOLD, Walter, 66119 Saarbrücken (DE); SCHWARZ, Kerstin, 66763 Dillingen (DE); RABE, Ute, 66111 Saarbrücken (DE)
(74) Vertreter: Rösler, Uwe
(86) Internationale Anmeldenummer: PCT/EP2007/001736
(87) Internationale Veröffentlichungsnummer: WO 2007/104432

(56) Entgegenhaltungen:
- US-B1- 6 185 991
- TRAN T ET AL: "Quantitative two-dimensional carrier profiling of a 400 nm complementary metal-oxide-semiconductor device by Schottky scanning capacitance microscopy" JOURNAL OF APPLIED PHYSICS, AMERICAN INSTITUTE OF PHYSICS. NEW YORK, US, Bd. 88, Nr. 11, 1. Dezember 2000 (2000-12-01), Seiten 6752-6757, XP012051043 ISSN: 0021-8979
- WEAVER J M R ET AL: "HIGH RESOLUTION ATOMIC FORCE MICROSCOPY POTENTIOMETRY" JOURNAL OF VACUUM SCIENCE AND TECHNOLOGY: PART B, AVS / AIP, MELVILLE, NEW YORK, NY, US, Bd. 9, Nr. 3, 1. Mai 1991 (1991-05-01), Seiten 1559-1561, XP000222582 ISSN: 1071-1023
- DE WOLF P ET AL: "Status and review of two-dimensional carrier and dopant profiling using scanning probe microscopy" JOURNAL OF VACUUM SCIENCE & TECHNOLOGY B: MICROELECTRONICS PROCESSING AND PHENOMENA, AMERICAN VACUUM SOCIETY, NEW YORK, NY, US, Bd. 18, Nr. 1, Januar 2000 (2000-01), Seiten 361-368, XP012008003 ISSN: 0734-211X

## Beschreibung

### Technisches Gebiet

Die Erfindung bezieht sich auf ein Verfahren zur Ermittlung einer Dotierstoffdichte an einer Oberfläche und/oder in einem oberflächennahen Schichtbereich einer Halbleiterprobe mit einem Rasterkraftmikroskop.

### Stand der Technik

Eine Möglichkeit einen Halbleiter zu dotieren ist das Verfahren der lonenimplantation, bei dem Atome oder Moleküle ionisiert, in einem elektrostatischen Feld beschleunigt und in einen Festkörper geschossen werden. Die Eindringtiefe der Ionen in den Festkörper hängt von ihrer Energie, die typischerweise zwischen einigen keV und einigen MeV liegt, und deren Masse sowie der Masse der Atome des Festkörpers ab. So beträgt etwa die mittlere Reichweite von 10 keV Phosphorionen in Silizium 14 nm und von 1 MeV Borionen in Silizium 1,8 µm. Durch Ionenbeschuß eines Festkörpers ist es möglich, viele Eigenschaften, wie elektrische und optische Eigenschaften eines Festkörpers, Volumenänderung, mechanische Spannungen der Festkörperoberfläche bzw. der oberflächennahen Schicht des Festkörpers zu verändern, wie es aus einem Buch von H. Ryssel, I. Ruge: "Ionenimplantation", Teubner, Stuttgart, 1978 entnehmbar ist. Es ist daher von großem Interesse nach erfolgter Dotierung die Dotierstoffdichte zu erfassen, um bessere Kenntnisse über die Abhängigkeit zwischen der Dotierstoffverteilung innerhalb eines Festkörpers und den durch die Dotierung veränderten Festkörpereigenschaften zu erhalten.

So gibt es eine Reihe von Techniken zur Dotierstoffdichtebestimmung in einem zumeist aus Halbleitermaterial bestehenden Festkörper, bei denen die Rasterkraftmikroskopie, siehe auch G. Binnig, C. F. Quate and C. Gerber, Atomic Force Microscopy, Phys. Rev. Lett. 56, 930-933 (1986), eingesetzt wird, bei der eine kleine Blattfeder von etwa 100 µm bis 500 µm Länge mit einer Spitze mittels piezoelektrischer Verstellelemente über einen Oberflächenbereich einer zu untersuchenden Festkörperprobe gerastert wird, wobei ein Positionssensor die Auslenkung der Blattfeder derart misst, dass ein Laserstrahl auf die Rückseite der Blattfeder fokussiert, dort reflektiert und auf eine Photodiode gelenkt wird. Eine Verbiegung der Blattfeder bewirkt eine Änderung des Reflektionswinkels des Laserstrahls und damit verbunden auch eine Änderung der an der Photodiode abgreifbaren Photospannung, über die die Topographie der Oberfläche abgebildet werden kann, indem über eine Regelschleife der Sensor oder die Probe während des Rasterns senkrecht zur Probenoberfläche, d.h. in z-Richtung, so nachgeführt wird, dass die Auslenkung der Blattfeder konstant bleibt. Die z-Spannung wird als Farbwert kodiert und über einen Rechner als Topographiebild dargestellt.

Durch den Vorgang der Dotierung einer Halbleiterprobe unter Verwendung hoher Beschleunigungsspannungen kann die Oberflächen-Topographie der Probe verändert werden. Kommt es zur Aufrauhung der Oberfläche, so kann der dotierte Bereich durch Abrastern der Topographie mittels konventioneller Rasterkraftmikroskopie-Technik nachgewiesen werden. Es ist jedoch schwierig, mit dieser Technik eine Aussage über die Ionendichte der Raumladungszone, die sich nach einer Dotierung ausbildet, zu machen.

In dem Artikel von P. de Wolf, M. Geva, T. Hantschel, W. Vandervorst and R.B. Bylsma, Two-dimensional carrier profiling of InP structures using scanning spreading resistance microscopy, Appl. Phys. Lett. 73, 2155-2157 (1998) wird zur Feststellung von Ladungsverteilungen in Halbleiteroberflächen die Kraftmikroskopie angewandt, bei der die Spitze einer leitfähigen Blattfeder über die Oberfläche eines Halbleiterelements gerastert, wird. Durch Aufbringen einer statischen Kraft, drückt sich die Spitze in das zu untersuchende Halbleiterelement ein. Der Kontaktradius ist. durch die Hertzsche Kontaktmechanik gegeben und beträgt typischerweise 30 nm. Es wird eine Gleichspannung an den Sensorbalken angelegt. Der resultierende Strom durch die Probe wird an der Probenunterseite in Abhängigkeit der Spitzenposition mit Hilfe eines logarithmischen Verstärkers gemessen. Der insgesamt gemessene Widerstand setzt sich aus der Summe des Kontaktwiderstandes und des Volumenwiderstandes der Probe zusammen. Durch Rastern über die Oberfläche kann somit ein Abbild der Leitfähigkeitsverteilung und letztlich der Dotierung eines Wafers oder der Halbleiterstruktur erhalten werden. Die räumliche Auflösung des Verfahrens ist durch den Kontaktradius der Sensorspitze bestimmt. Diese Technik wird auch zur Charakterisierung von pn-Kontakten sowie von optoelektronischen Strukturen verwandt und wird "Scanning spreading resistance microscopy" (SSRM) genannt.

Eine weitere Technik zum Nachweis von Dotierungen ist die so genannte "Scanning Capacitance Microscopy" (SCM). Bei dieser Technik kann der Nachweis der Dotierung zum einen über einen Metall-Halbleiter Kontakt, also eine Schottky-Barriere, zwischen Spitze und Komponente erfolgen oder die Spitze und/oder die zu untersuchende Komponente kann mit einer isolierenden Schicht versehen sein, damit der elektrische Kontaktwiderstand genügend groß bleibt. Als Messgröße dient in diesem Fall die lokale elektrische Kapazität zwischen Spitze und Oberfläche. Ladungsverteilungen verursachen eine Änderung der Kapazität und damit einen Kontrast für eine bildliche Darstellung. Die Kapazität wird mit Hilfe bekannter elektrischer Messtechniken ermittelt, siehe hierzu bspw. J. R. Matey and J. Blanc, Scanning capacitance microscopy, J. Appl. Phys. 57, 1437-1444 (1985) und T. Tran et al. "Quantitative two-dimensional carrier profiling of a 400 nm complementary metal-oxide-semiconductor device by Schottky scanning capacitance microscopy" J. Appl. Phys. 88, 6752-6757 (2000).

Eine kontaktfreie Untersuchungsmethode zwischen Blattfederspitze und Probenkörperoberfläche beschreibt Loppacher et al. mittels der so genannten "Kelvin Probe Force Microscopy" (KPFM) unter Vakuumbedingungen, siehe C. Loppacher, U. Zerweck, S. Teich, E. Beyreuther, T. Otto, S. Grafström and L. M. Eng, FM demodulated Kelvin probe force microscopy for surface photovoltage tracking, Nanotechnology 16, S1-S6 (2005). Allein durch Nachweis von elektrostatischen Kräften zwischen der Blattfederspitze und der Probenoberfläche wird das lokale Oberflächenpotential erfasst, wobei die Blattfederspitze und die Probenoberfläche nicht in mechanischen Kontakt treten. Die Blattfeder wird dabei durch Anlegen einer elektrischen Wechselspannung zwischen Blattfederspitze und der zu untersuchenden Probe in Resonanzschwingungen versetzt. Zudem wird eine Gleichspannung zwischen Probe und Spitze derart angelegt, so dass die elektrostatischen Kräfte zu Null kompensiert werden. Die angelegte Gleichspannung wird aufgezeichnet, wodurch man das Oberflächenpotential der Probe erhält, das von der Ladungsverteilung abhängig ist. Zudem kann die Oberfläche mit Licht mit einer Photonenenergie bestrahlt werden, die größer ist als die Bandlücke des halbleitenden Festkörpers bzw. der Dotierstoffe ist, wodurch Elektronen-Löcher-Paare innerhalb der Raumladungsschicht gebildet werden, die sich aufgrund unterschiedlicher Austrittsarbeiten zu oberflächennahen Bereichen hin bewegen und infolgedessen zu einer Veränderung des Oberflächen-Potentials führen, das über die elektrostatischen Kräfte gemessen werden kann. So lassen sich mit dieser Technik Informationen über Oberflächenzustände und Ladungsbeweglichkeiten, wie z.B. Diffusionslängen, Rekombinationsraten gewinnen. Diese Methode bietet den Vorteil, dass das elektrische Feld zwischen Spitze und Probe sehr gering ist, was die elektronische Bandstruktur des untersuchten Festkörpers praktisch unverändert lässt.

Eine weitere Methode zum Nachweis von dotierten Bereichen besteht in der Anwendung von Wirbelstromtechniken in Verbindung mit der Magnet-Kraftmikroskopie (Magnetic Force Microscopy, MFM), siehe auch M. A. Lantz, S. P. Jarvis and H. Tokumoto, High resolution eddy current microscopy, Appl. Phys. Lett. 78, 383-385 (2001). Eine schwingende Blattfeder mit magnetischer Spitze bewegt sich über eine leitfähige Oberfläche. Die Schwingung der Blattfeder induziert in der Probenoberfläche ein Wirbelstromfeld, dessen Streufeld wiederum auf die Spitze zurückkoppelt. Die Änderung der Schwingungsamplitude der Blattfeder gibt Aufschluss über die lokale Leitfähigkeit der Probe. Die Auflösung des Verfahrens wird durch das magnetische Streufeld bestimmt und beträgt einige 100 nm.

Mit der Sensorspitze eines Kraftmikroskops können ebenso auch Ultraschallwellen detektiert werden und dies mit einer dem Kraftmikroskop eigenen hohen lateralen Auflösung, wies dies auch aus DE 43 24 983 B1 zu entnehmen ist. Bei der Ultraschall-Kraftmikroskopie (Atomic Force Acoustic Microscopy, AFAM) befindet sich unter der Probe ein Ultraschall-Prüfkopf, der Longitudinal-, oder Transversalwellen in die Probe aussendet und somit senkrecht zur Oberfläche, oder lateral zur Oberfläche Verschiebungen verursacht. Der Ultraschallwandler ist mit einem Frequenzgenerator verbunden, der ihn mit einer sinusförmigen Wechselspannung versorgt. Ist die Spitze des Federbalkens in Kontakt mit der Probenoberfläche, so werden die Schwingungen von der Probe auf die Blattfeder übertragen. Die Resonanzfrequenzen der Blattfeder hängen von den physikalischen Kräften ab, die auf die Spitze wirken. Die Resonanzen der Blattfeder in Kontakt mit der Probenoberfläche werden als Kontaktresonanzen des Systems Probe-Blattfeder bezeichnet, siehe auch U. Rabe, K. Janser and W. Arnold, "Vibrations of Free and Surface-Coupled Atomic-Force Microscope Cantilevers: Theory and Experiment", Rev. Sci. Instr., 67, 3281-3293 (1996). Mit Hilfe der Kontaktresonanzen können elastische Eigenschaften von Materialien bestimmt werden. Da Dotierungen die elastischen Eigenschaften von Halbleitern beeinflussen, können diese mit der AFAM-Technik ebenfalls detektiert werden.

### Darstellung der Erfindung

Der Erfindung liegt die Aufgabe zugrunde, ein Verfahren zur Ermittlung einer Dotierstoffdichte an einer Oberfläche und/oder in einem oberflächennahen Schichtbereich einer Halbleiterprobe unter Verwendung eines Rasterkraftmikroskops derart anzugeben, dass die Erfassung der Dotierstoffdichten mit einer lateralen Auflösung von weniger als 100 nm möglich wird. Hierbei gilt es den erforderlichen messtechnischen Aufwand so gering wie möglich zu halten, d. h. erweiterte Messkreise, wie sie bspw. zur vorstehend erläuterten Kapazitätsmessung erforderlich sind, sollen vermieden werden.

Die Lösung der der Erfindung zugrunde liegenden Aufgabe ist im Anspruch 1 angegeben. Vorteilhafte Merkmale sind Gegenstand der Unteransprüche sowie der weiteren Beschreibung unter Bezugnahme auf die Ausführungsbeispiele zu entnehmen.

Lösungsgemäß zeichnet sich das Verfahren zur Ermittlung einer Dotierstoffdichte an einer Oberfläche und/oder in einem oberflächennahen Schichtbereich einer Halbleiterprobe mit einem Rasterkraftmikroskop dadurch aus, dass die Blattfederspitze des Rastermikroskops unter Ausbildung einer Schottky-Barriere in Kontakt mit der Halbleiterprobe gebracht wird, wobei im Bereich der Schottky-Barriere zwischen der Blattfederspitze und der Halbleiterprobe ein elektrisches Wechselpotential angelegt wird, so dass eine die Schottky-Barriere charakterisierende Raumladungszone innerhalb der Halbleiterprobe bzgl. ihrer räumlichen Ausdehnung zu Schwingungen angeregt wird, wodurch im Kontaktbereich zwischen Blattfederspitze und Halbleiterprobe innerhalb des Halbleiters schwingende Volumenänderungen hervorgerufen werden, die die Blattfeder in Schwingungen versetzt, die detektiert und der Ermittlung der Dotierstoffdichte zugrunde gelegt werden.

Das neuartige Verfahren, das anmelderseits als Scanning Schottky Vibration Microscopy (SSVM) bezeichnet wird, unterscheidet sich von den vorstehend bekannten Verfahren darin, dass es Kontaktresonanzen nutzt, wobei die Schwingungen der Blattfeder gemessen werden. Hierbei besteht die Blattfederspitze aus einem Metall oder ist zumindest mit einer Metallschicht überzogen und bildet bei in Kontakt treten mit der Halbleiteroberfläche eine sog. Schottky-Barriere bzw. Schottky-Kontakt aus, bei dem aufgrund der unterschiedlichen Fermi-Niveaus zwischen Halbleiter und Metall eine Raumladungszone geschaffen wird, die sich als Verarmungsschicht an Ladungsträgern im Halbleiter ausbildet. Wird im Bereich des Schottky-Kontaktes eine elektrische Wechselspannung angelegt, so ändert sich die Größe der Raumladungszone in Abhängigkeit der Wechselspannung, d. h. sie vergrößert bzw. verkleinert sich. Die Änderung der Dicke der sich ausbildenden Raumladungszone ist mit einer Gitterverzerrung des Halbleitermaterials verbunden, die wiederum unterschiedliche Ursachen haben kann. Nach dem derzeitigen Verständnis des zu beobachtenden Effektes, bei dem das Halbleitermaterial lokale schwingende Volumenänderungen zeigt, wird davon ausgegangen, dass Gitterverzerrungen über eine Anziehung zwischen den negativen Elektronen im Metall und den positiv geladenen Atomrümpfen in der Elektronen-Verarmungszone im Halbleiter entstehen. Die periodischen Gitterverzerrungen in den dotierten Bereichen bewirken periodische Gitterverzerrungen in der umgebenden Halbleiterprobe und vermögen die mit dem dotierten Halbleiterbereich in Kontakt stehende Blattfeder gleichfalls zu Schwingungen anzuregen. Die auf die Blattfeder übertragenen Schwingungen werden über den an der Rückseite der Blattfeder reflektierten Laserstrahl mittels Photodiode abgegriffen, an einen Lock-In-Verstärker oder einen anderen geeigneten Verstärker weitergegeben und letztlich einer Auswerteeinheit zugeführt, die vorzugsweise aus einem Oszillograph und Computer besteht, in dem das charakteristische Schwingungssignal einer Dotierstoffdichte zugeordnet wird. Die Zuordnung von Dotierstoffdichtewerten zu gemessenen Signalwerten kann mit Hilfe geeigneter Referenzmessungen vorgenommen werden, die an Halbleiterproben bekannter Dotierungsdichten durchgeführt worden sind.

Der entscheidende Vorteil des lösungsgemäßen Verfahrens zur Bestimmung der Dotierstoffdichte ist darin zu sehen, dass die Messungen mit handelsüblichen Rastermikroskopvorrichtungen durchgeführt werden können, wobei die zwischen der Blattfederspitze und der Halbleiterprobe wirkenden Kontaktkräfte weit unter einem µN betragen, d. h. weit aus geringer sind als beispielsweise bei der Technik SSRM, bei der Kontaktkräfte von ca. 10 µN vorherrschen. Somit ist es möglich, mit dem lösungsgemäßen Verfahren sowohl die zu untersuchende Halbleiterprobe als auch die Blattfederspitze während des Messvorganges zu schonen. Aus den geringeren Kontaktkräften ergibt sich außerdem ein geringerer Kontaktradius. Der Kontaktradius bestimmt die laterale Ortsauflösung des Verfahrens. Das lösungsgemäße Verfahren zur Bestimmung der Dotierstoffdichte hat daher eine höhere lokale Auflösung als beispielsweise die Technik SSRM.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematische Darstellung zur Ausbildung einer Schottky-Barriere bzw. Schottky-Kontaktes zwischen Blattfederspitze und dotierter Halbleiterprobe,
- Fig. 2: experimenteller Aufbau zur Detektion dotierter Halbleiterbereiche,
- Fig. 3: graphische Darstellung einer gemessenen Schwingungsamplitude,
- Fig. 4a, b: graphische Darstellung einer gemessenen Schwingungsamplitude bei unterschiedlichen Gleichspannungsniveaus,
- Fig. 5: Darstellung von Konturlinien gleicher Dotierungsdichte in einer maskierten Halbleiterprobe sowie
- Fig. 6: Spektrum einer aufgenommenen Kontaktresonanz zwischen Blattfederspitze und Halbleiterprobe.

### Wege zur Ausführung der Erfindung, gewerbliche Verwendbarkeit

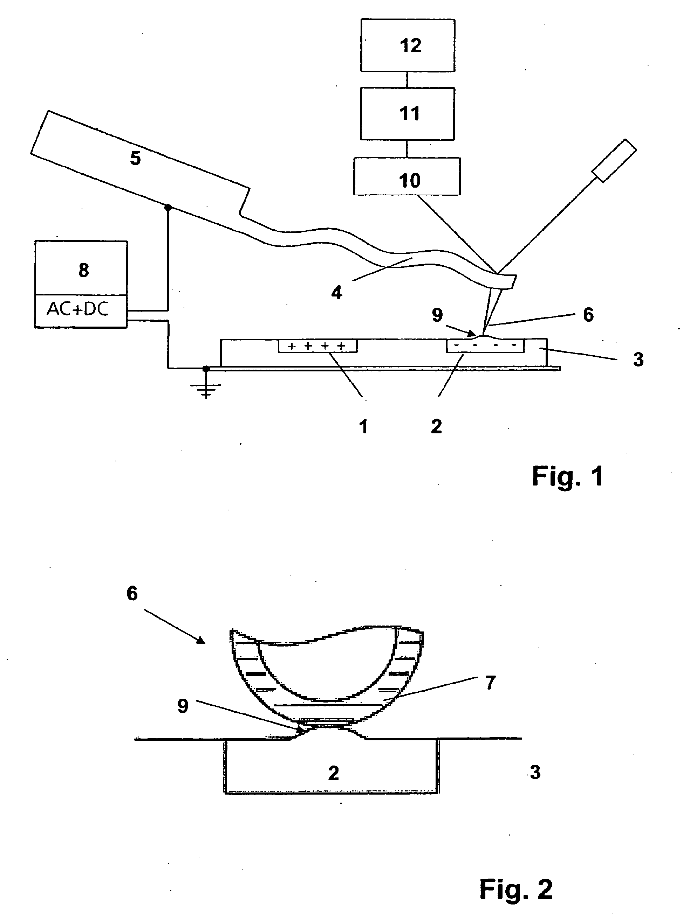

In Figur 1 ist der experimentelle Aufbau zur Detektion dotierter Bereiche 1, 2, je nach dem ob sie positiv oder negativ dotiert sind, einer Halbleiterprobe 3 dargestellt. Die Vorrichtung zur Untersuchung bzw. Ermittlung der Dotierstoffdichte in den jeweiligen Halbleiterbereichen 1, 2 unterscheidet sich nicht von einer an sich bekannten Rastermikroskopanordnung, bei der eine einseitig eingespannte Blattfeder 4, zumeist einseitig verbunden mit einem Chip 5 über die Oberfläche der Halbleiterprobe 3 gerastert bzw. gescannt wird. Am freien Ende der Blattfeder 4 ist eine Sensorspitze 6 vorgesehen, die beim lösungsgemäßen Verfahren zur Dotierstoffdichtebestimmung in Kontakt mit der Halbleiterprobe 3 insbesondere mit den dotierten Bereichen 1, 2 gebracht wird. Die Sensorspitze 6, die zumeist aus Silizium besteht und in einer Detailquerschnittsdarstellung in Figur 2 dargestellt ist, ist mit einer metallischen elektrisch leitfähigen Beschichtung 7 umgeben. Durch Kontakt der Sensorspitze 6 mit, bspw. dem dotierten Bereich 1 der Halbleiterprobe 3 bildet sich zwischen der Spitze 6 und der Halbleiterprobe 3 eine Schottky-Barriere aus, deren an Ladungsträger verarmte Raumladungszone in den Bereich der Halbleiterprobe 3 bzw. dem dotierten Bereich 1 hineinragt.

Ferner ist in an sich bekannter Weise ein Funktionsgenerator 8 mit der leitfähigen oder leitfähig beschichteten Blattfeder 4 über die Aufhängung der Blattfeder 4, d. h. über den Chip 5, verbunden, der eine zwischen der Halbleiterprobe 3 und der Blattfeder 4 in Frequenz und Amplitude vorgebbare Wechselspannung (AC) generiert, die bei Bedarf mit einer Gleichspannungs-Komponente (DC) überlagerbar ist.

Bei Anlegen einer Wechselspannung zwischen der Sensorspitze 6 und der Halbleiterprobe 3 ändert die sich innerhalb der Halbleiterprobe 3 ausbildende Schottky-Barriere periodisch ihre räumliche Ausdehnung der Raumladungszone. Es zeigt sich, dass die im Kontaktbereich befindliche Halbleiteroberfläche räumliche Deformationen 9 unterliegt, durch die auch die Sensorspitze 6 sowohl lateral aber insbesondere senkrecht zur Probenoberfläche ausgelenkt wird.

Nach dem derzeitigen Kenntnisstand über den die lokalen Volumenschwingungen innerhalb der Halbleiterprobe initiierenden Kopplungsmechanismus, geht man davon aus, dass die Ausbildung der Raumladungszone bedingt durch die unterschiedlichen Ferminiveaus zwischen der metallischen Sensorspitze und dem dotierten Halbleitermaterial abhängig ist von einerseits der Lage des Ferminiveaus, andererseits von den Dotierstoffdichten innerhalb der dotierten Halbleiterbereiche und letztlich auch von der zwischen der Sensorspitze 6 und der Halbleiterprobe 3 bzw. den dotierten Bereichen 1, 2" anliegenden Wechselspannung abhängt. Grundsätzlich gibt es eine Vielzahl unterschiedlicher Kopplungsmechanismen, bspw. die Modulation der Bandkante über das sog. Deformationspotential, piezoelektrische Effekte, elektrostriktive Kopplungseffekte sowie kapazitive Kraftwirkungen, die je nach Materialwahl mehr oder weniger dominant für die auftretenden Volumengitterverzerrungen verantwortlich sind. Nach dem derzeitigen Verständnis wird davon ausgegangen, dass die Kopplung an Gitterverzerrungen über anziehende Kräfte zwischen den negativen Elektronen im Metall und den positiv geladenen Atomrümpfen in der Elektronen-Verarmungszone im Halbleiter erfolgt.

Unabhängig von den letztlich die Volumenschwingungen der dotierten Halbleiterbereiche verursachenden Kopplungsmechanismen ist lösungsgemäß erkannt worden, dass die über die Sensorspitze 6 auf die Blattfeder 4 übertragenen Schwingungen mit Hilfe des an der Rückseite der Blattfeder 4 reflektierten Laserstrahls, durch Detektion mittels einer Photodiode 10 ein Schwingungssignal generierbar ist, das an einen Lock-In-Verstärker 11 oder einen anderen geeigneten Verstärker weitergegeben und anschließend einer Auswerteeinheit 12 zugeführt wird, die zumeist aus einem Oszillograph und/oder Computer besteht und das entsprechend aufbereitete Schwingungssignal mit einer Dotierstoffdichte korreliert. Beispielsweise können die Amplitude oder die Phase des Schwingungssignals, die aus dem Lock-in-Verstärker 11 abgreifbar sind, aufgezeichnet werden. Die Zuordnung der Messgrößen zu den Dotierstoffdichten kann mit Hilfe im Vorfeld durchgeführter Referenzversuche und mit dabei gewonnenen Dotierstoffdichtewerten durchgeführt werden. Während der Dotierstoffdichtemessung wird durch die üblicherweise in kommerziellen Kraftmikroskopen vorhandene Rückkoppelelektronik die Topografie der Oberfläche erfasst und die statische Auflagekraft der Blattfeder konstant gehalten. Alternativ kann auch in einem ersten Durchgang nur die Topografie der Oberfläche gemessen werden und danach in einem zweiten Durchgang unter Verwendung der nun bekannten Höheninformation die Dotierstoffdichte. Ferner kann das Schwingungssignal, das aus dem Lock-In-Verstärker 11 abgreifbar ist, an den Funktionsgenerator 8 rückgespeist werden, um auf diese Weise das Schwingungssignal im untersuchten Bereiche der Probe genauer abzubilden.

Besonders vorteilhaft ist es, die Frequenz ω/2π der zwischen der Blattfeder 4 und der Halbleiterprobe 3 angelegten Wechselspannung AC so zu wählen, dass sie in der Nähe einer Kontaktresonanzfrequenz der Blattfeder 4 liegt. Wird eine Wechselspannung mit eben dieser Frequenz ω/2π zwischen der Sensorspitze 6 der Blattfeder 4 und einer unter der Halbleiterprobe 3 befindlichen Gegenelektrode angelegt, ändert sich die räumliche Ausdehnung der Raumladungszone zwischen der Sensorspitze 6 und der Halbleiterprobe 3 im dotierten Bereich 1 bzw. 2 periodisch mit derselben Frequenz. Da die Blattfeder 4 mit ihrer Sensorspitze 6 in Kontakt mit der Probenoberfläche ist, erfährt sie eine Anregung mit der gleichen Frequenz ω/2π. Hierbei wirkt sich die dotierende Oberfläche auf verschiedene Weisen auf die sich längs der Blattfeder 4 ausbildenden Schwingungen aus, zumal einerseits die Kontaktresonanzfrequenz ω/2π als auch die angeregte Schwingungsamplitude und -phase von der lokalen Dotierung abhängt. Hieraus ergeben sich verschiedene Möglichkeiten zur Signalauswertung des von der Photodiode 10 generierten Schwingungssignals. Einerseits kann die Änderung der Schwingungsamplitude und -phase der Blattfeder 4 als Funktion des Ortes zum Nachweis der Dotierung verwandt werden. Eine Änderung der Amplitude und Phase der Balkenschwingung kann entweder direkt durch unterschiedlich geartete Schwingungsanregung in den verschieden dotierten Bereichen verursacht werden oder indirekt dadurch, dass die Kontaktresonanzfrequenz auf den unterschiedlich dotierten Gebieten der Probe verschieden sein kann. Andererseits kann die Änderung der Kontaktresonanzfrequenz selbst ebenfalls zum Nachweis der dotierten Bereiche 1, 2 benutzt werden. Hierzu kann entweder während des Rasterns an jedem Ort die Sendefrequenz in einem kleinen vordefinierten Frequenzbereich um die vermutete Kontaktresonanzfrequenz variiert, die Antwort des Balkens gemessen und aus dem Maximum dieser Antwort die Resonanzfrequenz bestimmt werden, oder es kann durch eine zusätzliche Rückkoppelschleife, die die Frequenz des Funktionsgenerators 8 kontinuierlich so einstellt, dass die Amplitude des Balkens maximal wird, die Kontaktresonanzfrequenz erfasst werden.

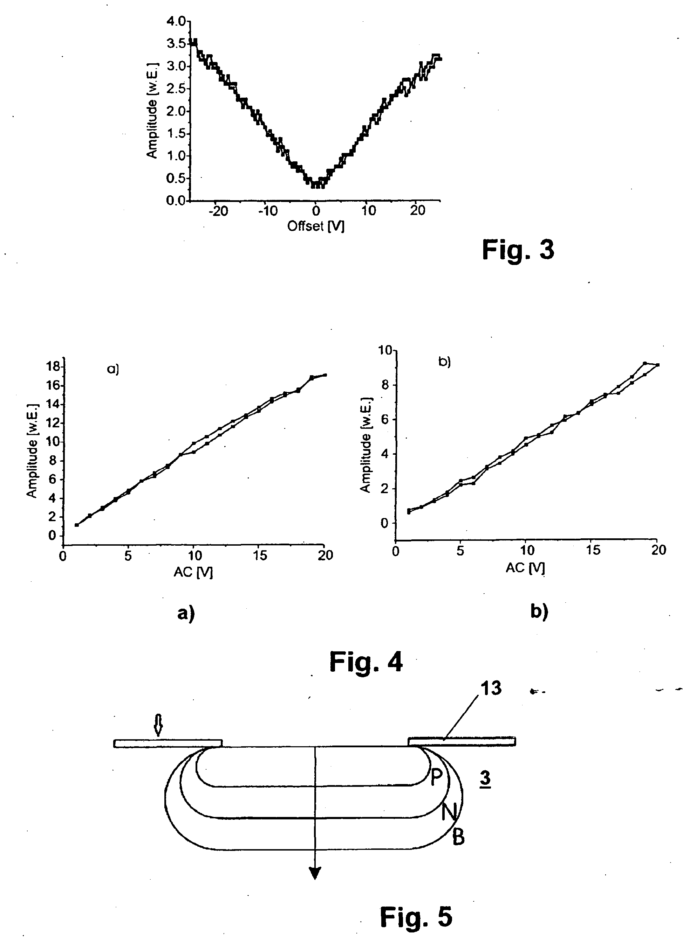

Unter Bezugnahme auf das in Figur 3 dargestellte Messdiagramm, längs dessen Abszisse der über die angelegte Wechselspannung zwischen Sensorspitze 6 und Halbleiterprobe 3 angelegte Gleichspannungsanteil und längs deren Ordinate die jeweils erfassten Schwingungsamplituden aufgetragen sind, kann die Schwingungsamplitude bei der ersten Biegekontaktresonanzfrequenz in Abhängigkeit von der angelegten Gleichspannungskomponente entnommen werden. Die Messung ist an einem Siliziumwafer durchgeführt worden, der einen Ionen implantierten Bereich mit Bor vorsieht. So wurde zunächst die Gleichspannung von 0 V auf + 25 V erhöht und dann auf - 25 V erniedrigt und schließlich wieder auf 0 V zurückgeführt. Hierbei ist sowohl die Amplitude als auch die Frequenz der zwischen der Sensorspitze 6 und der Halbleiterprobe angelegten elektrischen Wechselspannung konstant belassen. Es zeigt sich, dass die Schwingungsamplitude mit dem Betrag der Gleichspannung linear ansteigt. Darüber hinaus kann festgestellt werden, dass die Schwingungsamplitude des Federbalkens von der Amplitude der angelegten Wechselspannung abhängt. Dieser Zusammenhang ist aus den Diagrammdarstellungen gemäß Figuren 4 a und b zu entnehmen. Auch in diesen Diagrammen ist längs ihrer Ordinaten die Schwingungsamplitude der Blattfeder aufgetragenen, wohingegen längs ihrer Abszissen die Wechselspannungsamplitude in V Spitze-Spitze aufgetragen ist. Die Wechselspannungsamplitude wird in diesem Fall von 1 V Spitze-Spitze auf 20 V Spitze-Spitze erhöht und wieder auf 1 V Spitze-Spitze erniedrigt. Die Frequenz der Wechselspannung bleibt während der Messung konstant. Die Gleichspannung beträgt bei Fig. 4 a) -0,6 V und bei b) +0,6 V.

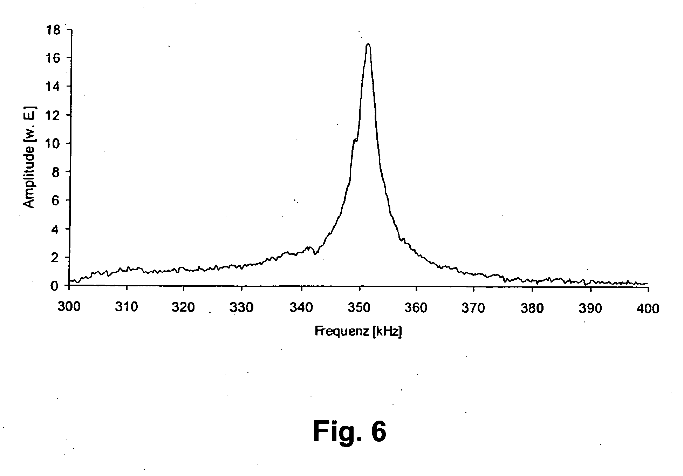

Aufgrund der hohen lateralen Auflösung zur Erfassung der Dotierstoffdichte können neben den dotierten Bereichen selbst auch Randschichten implantierter Bereiche, die auf laterale Streuung bei der Dotierung zurückzuführen ist, detektiert werden. Der Kontrast in der Schwingungsamplitude zwischen implantierten und nicht veränderten Bereichen innerhalb der Halbleiterprobe endet nicht mit dem Rand des implantierten Bereiches, sondern geht darüber hinaus. Dies kann auf die laterale Streuung zurückgeführt werden, die die Ionen, die senkrecht auf die Oberfläche auftreffen, im Kristall erfahren. In Figur 5 ist hierzu eine im Querschnitt dargestellte dotierte Halbleiterprobe 3 gezeigt, auf deren Oberseite eine Dotiermaske 13 aufliegt, durch die der laterale Dotierbereich innerhalb der Halbleiterprobe 3 begrenzt werden soll. Es zeigt sich, dass die laterale Streubreite von Bor B, Stickstoff N und Phosphor P bei einer Implantation durch eine Siliziumhalbleiterprobe unterschiedlich groß ausfällt. Mit Hilfe des lösungsgemäßen Verfahrens ist es möglich, auch Dotierstoffkonzentrationen in eben diesen Randschichtbereichen exakt zu erfassen. So konnte gezeigt werden, dass bei einer Dotierungsdosis von 5×10¹⁵ BF⁺₂ Ionen/cm² ein Signal-Rausch Abstand von ca. 35 dB vorhanden ist (Fig. 6). Hier betrug die Anregungsspannung 20 Volt und der Gleichspannungsanteil -0,6V. Bei einer Eindringtiefe der Ionen von ca. 200 nm entspricht dies einer Dichte von 2,5×10²⁰ Ionen/cm³. Nimmt man einen Signal-Rausch Abstand von 35 dB als Basis, und die in den Abbildungen 2 und 3 gezeigten Abhängigkeiten, müsste daher mindestens eine Dotierung von 10¹⁸ Ionen/cm³ nachweisbar sein. Es bleibt noch anzumerken, dass geringere Dotierungen wegen der größeren Ausdehnung der Schottky-Barriere ein größeres Signal erzeugen, sofern die Kopplung an die elastische Verzerrung gleich bleibt.

### Bezugszeichenliste

- 1, 2: Dotierte Bereiche
- 3: Halbleiterprobe
- 4: Blattfeder
- 5: Chip
- 6: Sensorspitze
- 7: Metallschicht
- 8: Funktionsgenerator
- 9: Volumenänderung
- 10: Photodiode
- 11: Lock-in-Verstärker
- 12: Auswerteeinheit
- 13: Maske

## Patentansprüche

1. Verfahren zur Ermittlung einer Dotierstoffdichte an einer Oberfläche und/oder in einem oberflächennahen Schichtbereich (1, 2) einer Halbleiterprobe (3) mit einem Rasterkraftmikroskop, dessen Blattfederspitze (6) unter Ausbildung einer Schottky-Barriere in Kontakt mit der Halbleiterprobe (3) gebracht wird, wobei im Bereich der Schottky-Barriere zwischen der Blattfederspitze (6) und der Halbleiterprobe (3) ein elektrisches Wechselpotential (AC) derart angelegt wird, dass eine die räumliche Ausdehnung der Schottky-Barriere bestimmende Raumladungszone innerhalb der Halbleiterprobe (3) bezüglich ihrer räumlichen Ausdehnung zu Schwingungen angeregt wird, die auf die Blattfeder (4) übertragen, detektiert und der Ermittlung der Dotierstoffdichte zugrunde gelegt werden.

2. Verfahren nach Anspruch 1,
**dadurch gekennzeichnet, dass** die Schwingungsanregung derart erfolgt, dass sich zwischen der Blattfeder (4) und der Halbleiterprobe (3) eine Kontaktresonanz ω/2π ausbildet.

3. Verfahren nach Anspruch 1 oder 2,
**dadurch gekennzeichnet, dass** zur Ermittlung der Dotierstoffdichte die Kontaktresonanzfrequenz ω/2π, die Amplitude und/oder die Phase der auf die Blattfeder (4) übertragenen Schwingungen zugrunde gelegt werden.

4. Verfahren nach Anspruch 3,
**dadurch gekennzeichnet, dass** die Dotierstoffdichte im Wege einer Signalrückkopplung zur Erfassung einer Änderung der Kontaktresonanzfrequenz ermittelt wird.

5. Verfahren nach Anspruch 4,
**dadurch gekennzeichnet, dass** die Dotierstoffdichte durch Erfassen einer Änderung der Schwingungsamplitude und/oder -phase der Blattfeder (4) als Funktion eines Ortes ermittelt wird.

6. Verfahren nach einem der Ansprüche 1 bis 6,
**dadurch gekennzeichnet, dass** an die Blattfeder (4) ein Gleichspannungspotential (DC) angelegt wird.

## Claims

1. A method for determining a dopant concentration on a surface and/or in a layer region (1, 2) lying close to the surface of a semiconductor sample (3) using an atomic force microscope, whose leaf-spring tip (6) is brought into contact with the semiconductor sample (3), forming a Schottky barrier, wherein an electric alternating current potential (AC) is applied between the leaf-spring tip (6) and the semiconductor sample (3) in the region of the Schottky barrier in such a way that a space charge region inside the semiconductor sample (3) defining the three-dimensional extension of the Schottky barrier is excited and begins to oscillate within the confines of its spatial extension, said oscillations are transmitted to the leaf spring (4), are detected, and form the basis for determining the dopant concentration.

2. The method according to Claim 1,
**characterized in that** the oscillation is excited in such a manner that a contact resonance ω/2Π forms between the leaf spring (4) and the semiconductor sample (3).

3. The method according to Claim 1 or 2,
**characterized in that** the contact resonance frequency ω/2Π, the amplitude, and/or the phase of the oscillations transmitted to the leaf spring (4) are used as the basis to determine the dopant concentration.

4. The method according to Claim 3,
**characterized in that** the dopant concentration is determined by way of a signal feedback to detect a variation in the contact resonance frequency.

5. The method according to Claim 4,
**characterized in that** the dopant concentration is determined by detecting a variation in the oscillation amplitude and/or phase of the leaf spring (4) as a function of a location.

6. The method according to one of Claims 1 through 6,
**characterized in that** a direct current potential (DC) is applied to the leaf spring (4).

## Revendications

1. Procédé de détermination d'une épaisseur de dope sur une surface et/ou dans une zone de couche (1, 2) proche de la surface d'un échantillon de semi-conducteur (3) à l'aide d'un microscope à balayage dont la pointe de ressort à lame (6) est amenée en contact avec l'échantillon de semi-conducteur (3) en formant une barrière de Schottky, un potentiel électrique alternatif (CA) étant appliqué au niveau de la barrière de Schottky entre la pointe de ressort à lame (6) et l'échantillon de semi-conducteur (3) de manière à ce qu'une zone de charge d'espace définissant l'extension spatiale de la barrière de Schottky soit excitée dans l'échantillon de semi-conducteur (3) au niveau de son extension spatiale pour créer des oscillations qui sont transmises au ressort à lame (4), détectées et prises comme base pour la détermination de l'épaisseur de dope.

2. Procédé selon la revendication 1,
**caractérisé en ce que** l'excitation créant des oscillations se fait d'une manière telle qu'il se forme une résonance de contact w/2Π entre le ressort à lame (4) et l'échantillon de semi-conducteur (3).

3. Procédé selon la revendication 1 ou 2,
**caractérisé en ce que**, pour la détermination de l'épaisseur de dope, on prend comme base la fréquence de résonance de contact w/2Π, l'amplitude et/ou la phase des oscillations transmises au ressort à lame (4).

4. Procédé selon la revendication 3,
**caractérisé en ce que** l'épaisseur de dope est déterminée au cours d'une rétroaction de signal pour détecter une modification de la fréquence de résonance de contact.

5. Procédé selon la revendication 4,
**caractérisé en ce que** l'épaisseur de dope est déterminée par détection d'une modification de l'amplitude et/ou phase d'oscillation du ressort à lame (4) en fonction d'un lieu.

6. Procédé selon une des revendications 1 à 6,
**caractérisé en ce qu'**un potentiel de tension continue (CC) est appliqué au ressort à lame (4).
